# EUROPÄISCHE PATENTSCHRIFT

(11) **EP 3 684 659 B1**
(45) Veröffentlichungstag und Bekanntmachung des Hinweises auf die Patenterteilung: **23.11.2022**
(21) Anmeldenummer: 18769347.8
(22) Anmeldetag: 12.09.2018
(51) Int. Cl.: B60T 8/32

(54) **BREMSANLAGE FÜR EIN KRAFTFAHRZEUG SOWIE VERFAHREN ZU DEREN BETRIEB**
BRAKING SYSTEM FOR A MOTOR VEHICLE AND METHOD FOR OPERATING SAID BRAKING SYSTEM
SYSTÈME DE FREINAGE POUR VÉHICULE AUTOMOBILE ET PROCÉDÉ DE FONCTIONNEMENT DE CELUI-CI

(30) Priorität: 20.09.2017 DE 102017216617
(43) Veröffentlichungstag der Anmeldung: 29.07.2020
(73) Patentinhaber: Continental Automotive Technologies GmbH, 30165 Hannover (DE)
(72) Erfinder: ZIMMERMANN, Jochen, 56357 Oberwallmenach (DE)
(74) Vertreter: Continental Corporation
(86) Internationale Anmeldenummer: PCT/EP2018/074609
(87) Internationale Veröffentlichungsnummer: WO 2019/057586

(56) Entgegenhaltungen:
- WO-A1-98/39189
- DE-A1-102013 217 954
- DE-A1-102013 223 859
- US-A1- 2016 009 267

## Beschreibung

Die Erfindung betrifft eine Bremsanlage gemäß dem Oberbegriff von Anspruch 1 sowie ein Verfahren zum Betrieb einer solchen Bremsanlage.

Aus der DE 10 2013 217 954 A1 ist eine gattungsgemäße Bremsanlage mit zwei elektrisch steuerbaren Druckquellen für ein Kraftfahrzeug mit vier hydraulisch betätigbaren Radbremsen bekannt. Dabei sind die Radbremsen zur Betätigung in verschiedenen Betriebsarten mit den zwei elektrisch steuerbaren Druckquellen sowie auch mit einem bremspedalbetätigbaren Hauptbremszylinder verbunden. Die Bremsanlage umfasst neben Einlass- und Auslassventilen ein Kreistrennventil sowie insgesamt vier Trennventile zur Abtrennung des Hauptbremszylinders und der Weiterhin umfasst die Bremsanlage eine zentrale Steuer- und Regeleinheit, eine der ersten Druckquelle zugeordnete erste Steuer- und Regeleinheit und eine der zweiten Druckquelle zugeordnete zweite Steuer- und Regeleinheit. Die erste und zweite Steuer- und Regeleinheit dienen jeweils der Ansteuerung der entsprechenden Druckquelle. Mittels der zentralen Steuer- und Regeleinheit wird das Kreistrennventil betätigt. Die Betätigung der beiden Druckquellen-Trennventile wird ebenfalls mittels der zentralen Steuer- und Regeleinheit durchgeführt.

In zukünftigen Bremsanlagen, welche auch für das hochautomatisierte Fahren geeignet sein sollen, soll auf eine mechanische und/oder hydraulische Rückfallebene, in welcher der Fahrer durch Muskelkraft die Radbremsen betätigt kann, verzichtet werden.

Aus der DE 10 2013 223 859 A1 ist eine Bremsanlage für hydraulisch betätigbare Radbremsen mit einer mittels eines Bremspedals betätigbaren Simulationseinrichtung bekannt, wobei keine mechanische und/oder hydraulische Wirkverbindung zwischen dem Bremspedal und den Radbremsen vorgesehen ist. Es ist eine einzige elektrisch steuerbare Druckquelle mit einem Stufenkolben und zwei Dichtelementen vorhanden, um eine erhöhte Verfügbarkeit der Bremsanlage zu erreichen.

Es ist Aufgabe der vorliegenden Erfindung, eine für das hochautomatisierte Fahren geeignete Bremsanlage für ein Kraftfahrzeug mit zumindest vier hydraulisch betätigbaren Radbremsen bereitzustellen, welche auf eine mechanische und/oder hydraulische Rückfallebene verzichten kann und dabei dennoch eine hohe Verfügbarkeit besitzt und so eine ausreichende Sicherheit für hochautomatisiertes Fahren bzw. eine Autopilotfunktion bietet.

Diese Aufgabe wird erfindungsgemäß durch eine Bremsanlage gemäß Anspruch 1 und ein Verfahren gemäß Anspruch 12 gelöst.

Der Erfindung liegt der Gedanke zugrunde, dass in einer Bremsanlage, welche eine erste elektrisch steuerbare Druckquelle, die über ein erstes Trennventil mit einer ersten Bremskreisversorgungsleitung trennbar verbunden ist, eine zweite elektrisch steuerbare Druckquelle, die über ein zweites Trennventil mit einer zweiten Bremskreisversorgungsleitung trennbar verbunden ist, zumindest vier elektrisch betätigbare Einlassventile, wobei die erste Bremskreisversorgungsleitung mit zwei der Einlassventile verbunden ist und die zweite Bremskreisversorgungsleitung mit den zwei anderen Einlassventilen verbunden ist, ein elektrisch betätigbares Auslassventil je Radbremse zum Ablassen von Druckmittel aus der Radbremse, eine elektrisch betätigbare Kreistrennvorrichtung, durch welche die erste Bremskreisversorgungsleitung und die zweite Bremskreisversorgungsleitung hydraulisch getrennt sind, wenn die Kreistrennvorrichtung in einem unbetätigten Zustand ist, und durch welche die erste Bremskreisversorgungsleitung und die zweite Bremskreisversorgungsleitung hydraulisch miteinander verbunden sind, wenn die Kreistrennvorrichtung in einem betätigten Zustand ist, eine erste elektronische Vorrichtung, mittels welcher die erste Druckquelle betätigt wird, und eine zweite elektronische Vorrichtung, mittels welcher die zweite Druckquelle betätigt wird, wobei die zweite elektronische Vorrichtung von der ersten elektronischen Vorrichtung elektrisch unabhängig ist, umfasst, vorgesehen ist, dass das der ersten Druckquelle zugeordnete erste Trennventil von der zweiten elektronischen Vorrichtung und das der zweiten Druckquelle zugeordnete zweite Trennventil von der ersten elektronischen Vorrichtung betätigt wird.

Die zwei elektronischen Vorrichtungen sind voneinander elektrisch unabhängig in dem Sinne, dass ein Ausfall der ersten elektronischen Vorrichtung keinen Ausfall der zweiten elektronischen Vorrichtung bewirkt und umgekehrt, d.h. die beiden elektronischen Vorrichtungen sind galvanisch getrennt. Vorteilhafterweise wird daher die erste elektronische Vorrichtung von einer ersten elektrischen Energieversorgung und die zweite elektronische Vorrichtung von einer zweiten elektrischen Energieversorgung versorgt, wobei die erste elektrische Energieversorgung von der zweiten elektrischen Energieversorgung unabhängig ist. Die beiden elektronischen Vorrichtungen können in einem gemeinsamen Gehäuse oder auf einer gemeinsamen Leiterplatte, z.B. in einer gemeinsamen elektronischen Steuer- und Regeleinheit (ECU), angeordnet sein. Alternativ können die beiden elektronischen Vorrichtungen in zwei getrennten Gehäusen oder auf zwei getrennten Leiterplatten, z.B. in zwei elektronischen Steuer- und Regeleinheiten (ECU), angeordnet sein.

Die erste elektronische Vorrichtung ist zur Betätigung bzw. Ansteuerung der ersten Druckquelle ausgebildet. Bevorzugt wird die erste Druckquelle auch von der ersten elektronischen Vorrichtung mit elektrischer Energie versorgt. Entsprechend wird mittels der zweiten elektronischen Vorrichtung die zweite Druckquelle betätigt bzw. angesteuert. Bevorzugt wird die zweite Druckquelle auch von der zweiten elektronischen Vorrichtung mit elektrischer Energie versorgt.

Bevorzugt werden das erste Trennventil lediglich von der zweiten elektronischen Vorrichtung und das zweite Trennventil lediglich von der ersten elektronischen Vorrichtung betätigt. D.h. die erste elektronische Vorrichtung ist nicht zur Betätigung des ersten Trennventils ausgelegt und die zweite elektronische Vorrichtung ist nicht zur Betätigung des zweiten Trennventils ausgelegt. Auch ist keine weitere elektronische Vorrichtung, z.B. eine zentrale elektronische Vorrichtung, vorgesehen, welche das erste und das zweite Trennventil betätigt.

Bevorzugt ist die erste Druckquelle über genau ein betätigbares Ventil, nämlich das erste Trennventil, mit der ersten Bremskreisversorgungsleitung verbunden, d.h. zwischen dem ersten Trennventil und den zwei mit der ersten Bremskreisversorgungsleitung verbundenen Einlassventilen ist kein weiteres betätigbares Ventil angeordnet. So wird der Strömungswiderstand von der Druckquelle zu den entsprechenden Radbremsen möglichst gering gehalten.

Entsprechend ist bevorzugt die zweite Druckquelle über genau ein betätigbares Ventil, nämlich das zweite Trennventil, mit der zweiten Bremskreisversorgungsleitung verbunden, d.h. zwischen dem zweiten Trennventil und den zwei mit der zweiten Bremskreisversorgungsleitung verbundenen Einlassventilen ist kein weiteres betätigbares Ventil angeordnet.

Bevorzugt sind das erste und das zweite Trennventil stromlos offen ausgeführt. So ist kein Umschalten/Öffnen der Trennventile im fehlerfreien Betrieb der Bremsanlage notwendig, was Schaltgeräusche verhindert. Ein Abtrennen einer, z.B. defekten, Druckquelle durch Schließen des zugehörigen Trennventils ist durch die der anderen Druckquelle zugeordnete elektronische Vorrichtung möglich.

Die Kreistrennvorrichtung der Bremsanlage ist sozusagen stromlos geschlossen ausgeführt.

Bevorzugt ist die Kreistrennvorrichtung sowohl mittels der ersten elektronischen Vorrichtung als auch mittels der zweiten elektronischen Vorrichtung betätigbar bzw. wird die Kreistrennvorrichtung sowohl mittels der ersten elektronischen Vorrichtung als auch mittels der zweiten elektronischen Vorrichtung betätigt, um die erste Bremskreisversorgungsleitung und die zweite Bremskreisversorgungsleitung hydraulisch miteinander zu verbinden.

Bevorzugt umfasst die Kreistrennvorrichtung ein erstes elektrisch betätigbares, stromlos geschlossen ausgeführtes Kreistrennventil und ein zweites elektrisch betätigbares, stromlos geschlossen ausgeführtes Kreistrennventil, wobei die beiden Kreistrennventile einander parallel geschaltet sind. Besonders bevorzugt wird das erste Kreistrennventil von der ersten elektronischen Vorrichtung und das zweite Kreistrennventil von der zweiten elektronischen Vorrichtung betätigt. Vorteilhafterweise wird das erste Kreistrennventil lediglich von der ersten elektronischen Vorrichtung und das zweite Kreistrennventil lediglich von der zweiten elektronischen Vorrichtung betätigt, wodurch die Verwendung von doppelt ansteuerbaren Ventilen unnötig wird.

Die Bremsanlage umfasst bevorzugt eine Simulationseinrichtung zur Erzeugung eines Bremspedalgefühls, welche mit einem Bremspedal gekoppelt ist, wobei keine mechanische und/oder hydraulische Wirkverbindung zwischen dem Bremspedal und den Radbremsen vorgesehen ist. Die Simulationseinrichtung ist also nicht mit den Radbremsen hydraulisch verbunden. Die Bremsanlage umfasst auch keinen bremspedalbetätigbaren Hauptbremszylinder, der mit einer der Radbremsen verbunden ist.

Bevorzugt wird die erste Druckquelle durch eine (erste) Zylinder-Kolben-Anordnung mit einem (ersten) hydraulischen Druckraum gebildet, deren (erster) Kolben durch einen (ersten) elektromechanischen Aktuator betätigt wird, wobei der (erste) Druckraum in einem unbetätigten Zustand des (ersten) Kolbens über zumindest ein erstes Schnüffelloch mit einer ersten Verbindungsleitung verbunden ist, welche mit dem Druckmittelvorratsbehälter verbunden ist. Besonders bevorzugt umfasst die erste Druckquelle genau einen (ersten) hydraulischen Druckraum, d.h. die erste Druckquelle ist einkreisig aufgebaut.

Bevorzugt wird auch die zweite Druckquelle durch eine (zweite) Zylinder-Kolben-Anordnung mit einem (zweiten) hydraulischen Druckraum gebildet, deren (zweiter) Kolben durch einen elektromechanischen zweiten Aktuator (32, 52) betätigt wird, wobei der (zweite) Druckraum in einem unbetätigten Zustand des (zweiten) Kolbens über zumindest ein zweites Schnüffelloch mit einer zweiten Verbindungsleitung verbunden ist, welche mit dem Druckmittelvorratsbehälter verbunden ist. Besonders bevorzugt umfasst die zweite Druckquelle genau einen (zweiten) hydraulischen Druckraum, d.h. die zweite Druckquelle ist einkreisig aufgebaut.

Gemäß einer bevorzugten Weiterbildung der Erfindung werden die Einlass- und Auslassventile sämtlich von derselben elektronischen Vorrichtung betätigt. Besonders bevorzugt werden alle Einlass- und Auslassventile lediglich von derselben elektronischen Vorrichtung betätigt.

Bevorzugt ist ein Raddrehzahlsensor für jedes einer Radbremse zugeordnete Rad vorgesehen, wobei die Signale der Raddrehzahlsensoren derselben elektronischen Vorrichtung zugeführt und von dieser ausgewertet werden, welche die Einlass- und Auslassventile betätigt. So ist neben einem Druckaufbau auch eine radindividuelle Schlupfregelung mittels dieser elektronischen Vorrichtung möglich.

Bevorzugt ist eine Fahrdynamik-Sensorik vorgesehen, deren Signale der anderen elektronischen Vorrichtung als der elektronischen Vorrichtung, welche die Einlass- und Auslassventile betätigt, zugeführt und von dieser ausgewertet werden. Bei einem Ausfall der elektronischen Vorrichtung, welche die Einlass- und Auslassventile betätigt, ist so neben einer zentralen Druckregelung auch eine achsweise Druckregelung mittels der anderen elektronischen Vorrichtung möglich (Achs-Multiplex-Verfahren). Dies ermöglicht die Lenkbarkeit (z.B. bei gebremsten Ausweichmanövern durch einen Autopiloten) sowie die Stabilität aufrechtzuerhalten.

Bevorzugt umfasst die Bremsanlage eine Messvorrichtung zur Erfassung eines Druckmittelstandes des Druckmittelvorratsbehälters. Der Druckmittelvorratsbehälter ist vorteilhafterweise durch eine Schottwand in zwei Kammern geteilt, wobei eine erste Kammer der ersten Druckquelle und eine zweite Kammer der zweiten Druckquelle zugeordnet ist. Die Messvorrichtung ist besonders bevorzugt in der ersten Kammer angeordnet.

Die Erfindung bietet den Vorteil, dass in dem Fall, wenn eine der elektronischen Vorrichtungen ausfällt, mittels der anderen elektronischen Vorrichtung ein Bremsdruckaufbau an allen vier Radbremsen durchgeführt werden kann, wobei auch zumindest achsweise unterschiedliche Bremsdrücke eingestellt werden können.

Bevorzugt wird im fehlerfreien Fall der Bremsanlage, die Druckbereitstellung an den Radbremsen mittels der ersten Druckquelle durchgeführt. Die erste Druckquelle ist daher bevorzugt stärker bzw. größer dimensioniert als die zweite Druckquelle. Besonders bevorzugt werden die Signale der Fahrdynamik-Sensorik der ersten elektronischen Vorrichtung (welche der ersten Druckquelle zugeordnet ist) zugeführt und von dieser ausgewertet. Die Einlass- und Auslassventile werden von der zweiten elektronischen Vorrichtung betätigt.

Die Erfindung betrifft auch ein Verfahren zum Betrieb einer erfindungsgemäßen Bremsanlage.

Bevorzugt wird bei einem Ausfall der ersten Druckquelle mittels der zweiten elektronischen Vorrichtung das erste Trennventil geschlossen und die zweite Druckquelle zum Aufbau eines Bremsdruckes betätigt.

Weiterhin wird bei einem Ausfall der ersten Druckquelle bevorzugt die Kreistrennvorrichtung mittels der zweiten elektronischen Vorrichtung betätigt, so dass die erste Bremskreisversorgungsleitung und die zweite Bremskreisversorgungsleitung hydraulisch miteinander verbunden sind. So kann mittels der zweiten Druckquelle Druck an den vier Radbremsen aufgebaut werden.

Bevorzugt werden bei einem Ausfall der ersten Druckquelle mittels der zweiten elektronischen Vorrichtung die Einlass- und Auslassventile zum Einstellen radindividueller Bremsdrücke betätigt. Dies ermöglicht auch bei Ausfall der ersten Druckquelle Antiblockier- oder Traktionsregelfuntionen der Bremsanlage.

Bevorzugt wird bei einem Ausfall der zweiten Druckquelle mittels der ersten elektronischen Vorrichtung das zweite Trennventil geschlossen und die erste Druckquelle zum Aufbau eines Bremsdruckes betätigt.

Weiterhin wird bei einem Ausfall der zweiten Druckquelle bevorzugt die Kreistrennvorrichtung mittels der ersten elektronischen Vorrichtung betätigt, so dass die erste Bremskreisversorgungsleitung und die zweite Bremskreisversorgungsleitung hydraulisch miteinander verbunden sind. So kann mittels der ersten Druckquelle Druck an den vier Radbremsen aufgebaut sowie geregelt werden.

Bevorzugt werden bei einem Ausfall der zweiten Druckquelle mittels der ersten elektronischen Vorrichtung die erste Druckquelle und die Kreistrennvorrichtung betätigt, um gemäß einem Achs-Multiplex-Verfahren achsindividuelle Bremsdrücke an den Radbremsen einzustellen.

Weitere bevorzugte Ausführungsformen der Erfindung ergeben sich aus den Unteransprüchen und der nachfolgenden Beschreibung anhand einer Figur.

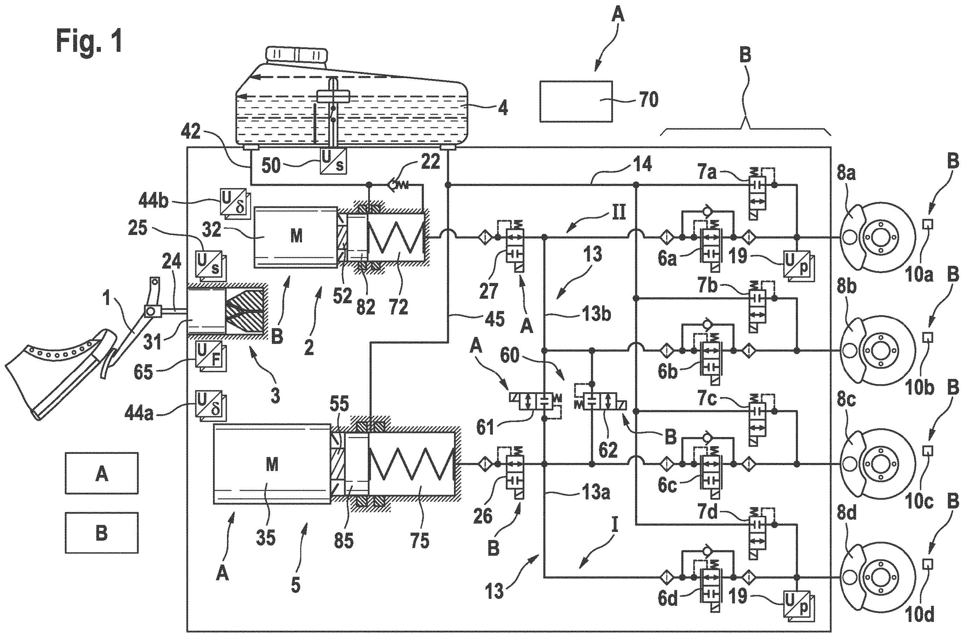

Es zeigt schematisch
- Fig. 1: ein Ausführungsbeispiel einer erfindungsgemäßen Bremsanlage.

In Fig. 1 ist ein Ausführungsbeispiel einer erfindungsgemäßen Bremsanlage für ein Kraftfahrzeug mit vier hydraulisch betätigbaren Radbremsen 8a-8d schematisch dargestellt. Die Bremsanlage umfasst eine erste elektrisch steuerbare Druckquelle 5, eine zweite elektrisch steuerbare Druckquelle 2, einen unter Atmosphärendruck stehenden Druckmittelvorratsbehälter 4 und je Radbremse ein Einlassventil 6a-6d und ein Auslassventil 7a-7d.

Beispielsgemäß sind die Radbremsen 8a und 8b den Rädern einer Fahrzeugachse und die Radbremsen 8c und 8d den Rädern der anderen Fahrzeugachse zugeordnet.

Es handelt sich beispielsgemäß um eine Bremsanlage ohne mechanische und/oder hydraulische Wirkverbindung zwischen einem Bremspedal 1 und den Radbremsen 8a-8d. Die Bremsanlage umfasst eine mittels des Bremspedals 1 betätigbare Simulationseinrichtung 3, welche dem Fahrzeugführer ein bekanntes Bremspedalgefühl vermittelt.

Es ist eine Bremsversorgungsleitung 13 vorgesehen, welche die erste und die zweite Druckquelle 2, 5 mit den Einlassventilen 6a-6d und damit den Radbremsen 8a-8d verbindet. Dabei ist die erste Druckquelle 5 über ein erstes, vorzugsweis stromlos offenes, Trennventil 26 mit der Bremsversorgungsleitung 13 verbunden und die zweite Druckquelle 2 über ein zweites, vorzugsweis stromlos offenes, Trennventil 27 mit der Bremsversorgungsleitung 13 verbunden. In der Bremsversorgungsleitung 13 ist eine elektrisch betätigbare Kreistrennvorrichtung 60 angeordnet, durch welche die Bremsversorgungsleitung 13 in eine erste Bremskreisversorgungsleitung 13a und eine zweite Bremskreisversorgungsleitung 13b hydraulisch getrennt werden kann. Die erste elektrisch steuerbare Druckquelle 5 ist über das erste Trennventil 26 mit der ersten Bremskreisversorgungsleitung 13a trennbar verbunden und die zweite elektrisch steuerbare Druckquelle 2 ist über das zweite Trennventil 27 mit der zweiten Bremskreisversorgungsleitung 13b trennbar verbunden.

Die Kreistrennvorrichtung 60 ist derart ausgeführt, dass durch sie die erste und die zweite Bremskreisversorgungsleitungen 13a, 13b hydraulisch getrennt sind, wenn die Kreistrennvorrichtung in einem unbetätigten Zustand ist. Wenn die Kreistrennvorrichtung in einem betätigten Zustand ist, sind die erste Bremskreisversorgungsleitung 13a und die zweite Bremskreisversorgungsleitung 13b hydraulisch miteinander verbunden.

Die erste Bremskreisversorgungsleitung 13a ist beispielsgemäß mit den Einlassventilen 6c und 6d verbunden, die zweite Bremskreisversorgungsleitung 13b ist mit den zwei anderen Einlassventilen 6a und 6b verbunden.

Die Kreistrennvorrichtung 60 ist also derart angeordnet, dass in einer Trennstellung der Kreistrennvorrichtung 60 die Bremsversorgungsleitung 13 in die erste Bremskreisversorgungsleitung 13a und einen zweiten Bremskreisversorgungsleitung 13b hydraulisch getrennt wird, wobei die erste Bremskreisversorgungsleitung 13a das erste Trennventil 26 mit den Einlassventilen 6c, 6d verbindet und die zweite Bremskreisversorgungsleitungen 13b das zweite Trennventil 27 mit den zwei anderen Einlassventilen 6a, 6b verbindet.

Vorteilhafterweise wird die Kreistrennvorrichtung 60 durch eine Parallelschaltung von zwei elektrisch betätigbaren, stromlos geschlossen ausgeführten Kreistrennventilen 61, 62 gebildet.

Die Auslassventile 7a-7d sind über eine gemeinsame Rücklaufleitung 14 mit dem Druckmittelvorratsbehälter 4 verbunden, so dass zum Abbau von Bremsdruck in einer oder mehreren Radbremsen Druckmittel in den Druckmittelvorratsbehälter 4 abgelassen werden kann.

Den Einlassventilen 6a-6d ist jeweils ein zu der Bremsversorgungsleitung 13 hin öffnendes, nicht näher bezeichnetes Rückschlagventil parallel geschaltet.

Die Bremsanlage umfasst eine erste elektronische Vorrichtung A und eine zweite elektronische Vorrichtung B, wobei die zweite elektronische Vorrichtung B von der ersten elektronischen Vorrichtung A elektrisch unabhängig ist. Die elektronischen Vorrichtungen A, B sind galvanisch getrennt. Bei einem Fehler in der ersten elektronischen Vorrichtung A z.B. durch einen elektrischen Defekt bleibt die zweite elektronische Vorrichtung voll funktionsfähig.

Die elektronische Vorrichtung A umfasst elektrische und/oder elektronische Bauelemente zur Ansteuerung und Betätigung der ersten Druckquelle 5 (durch den Pfeil mit A in Fig. 1 angedeutet). Vorrichtung A kann z.B. als eine erste elektronische Steuer- und Regeleinheit (ECU) oder als ein erster Teil einer elektronischen Steuer- und Regeleinheit ausgeführt sein. Die elektronische Vorrichtung A kann eine erste elektrische Energiequelle, durch welche die Vorrichtung A selbst und die Druckquelle 5 mit Energie versorgt wird, umfassen oder Vorrichtung A ist mit einer ersten elektrischen Energiequelle (z.B. einem ersten Bordnetz) verbunden. Die erste Druckquelle 5 kann direkt von der ersten elektrischen Energiequelle mit Energie versorgt werden oder von der Vorrichtung A (d.h. indirekt von der ersten elektrischen Energiequelle).

Die elektronische Vorrichtung B umfasst elektrische und/oder elektronische Bauelemente zur Ansteuerung und Betätigung der zweiten Druckquelle 2 (durch den Pfeil mit B in Fig. 1 angedeutet). Vorrichtung B kann z.B. als eine zweite elektronische Steuer- und Regeleinheit (ECU) oder als ein zweiter Teil einer elektronischen Steuer- und Regeleinheit ausgeführt sein. Die elektronische Vorrichtung B kann eine zweite elektrische Energiequelle, durch welche die Vorrichtung B selbst und die Druckquelle 2 mit Energie versorgt wird, umfassen oder Vorrichtung B ist mit einer zweiten elektrischen Energiequelle (z.B. einem zweiten Bordnetz) verbunden. In jedem Fall ist es für eine ausreichende Verfügbarkeit der Bremsanlage vorteilhaft, dass die zweite elektrische Energiequelle von der ersten Energiequelle unabhängig ist. Die zweite Druckquelle 2 kann direkt von der zweiten elektrischen Energiequelle mit Energie versorgt werden oder von der Vorrichtung B (d.h. indirekt von der zweiten elektrischen Energiequelle).

Simulationseinrichtung 3 weist beispielsgemäß einen Simulatorkolben 31 auf, welcher sich durch ein in einer Simulatorrückkammer angeordnetes elastisches Element (z.B. Simulatorfeder) an einem Gehäuse abstützt. Eine Kolbenstange 24 koppelt die Schwenkbewegung des Bremspedals 1 infolge einer Pedalbetätigung mit der Translationsbewegung des Simulatorkolbens 31, dessen Betätigungsweg von einem vorzugsweise redundant ausgeführten Wegsensor 25 erfasst wird. Bevorzugt ist weiterhin ein Kraftsensor 65 vorgesehen, welcher die vom Fahrer aufgebrachte Betätigungskraft erfasst. Die Signale der Sensoren 25, 65 repräsentieren einen Bremswunsch eines Fahrzeugführers.

Die erste elektrisch steuerbare Druckquelle 5 ist als eine hydraulische Zylinder-Kolben-Anordnung (bzw. ein einkreisiger elektrohydraulischer Aktuator (Linearaktuator)) ausgebildet, deren Kolben 85 von einem schematisch angedeuteten Elektromotor 35 unter Zwischenschaltung eines ebenfalls schematisch dargestellten Rotations-Translationsgetriebes 55 betätigt wird. Es ist ein der Erfassung der Rotorlage des Elektromotors 35 dienender Rotorlagensensor 44a vorgesehen.

Der Kolben 85 begrenzt den Druckraum 75 der Druckbereitstellungseinrichtung 5. Druckraum 75 ist über das stromlos offene Trennventil 26 mit der Bremsversorgungsleitung 13 bzw. der ersten Bremskreisversorgungsleitung 13a trennbar verbunden. Bei betätigter Kreistrennvorrichtung 60 ist Druckquelle 5 über Bremsversorgungsleitung 13 mit den Einlassventilen 6a-6d (und somit den vier Radbremsen 8a-8d) verbunden, bei unbetätigter Kreistrennvorrichtung 60 ist Druckquelle 5 über Bremskreisversorgungsleitung 13a mit den Einlassventilen 6c und 6d (und somit den zwei Radbremsen 8c, 8d) verbunden.

Der Druckraum 75 der Druckquelle 5 ist (im unbetätigten Zustand des Kolbens 85) über ein Schnüffelloch mit einer Verbindungsleitung 45 zum Druckmittelvorratsbehälter 4 hydraulisch verbunden, wobei das Schnüffelloch bei einer Betätigung des Kolbens 85 überfahren / geschlossen wird und so die Verbindung zum Druckmittelvorratsbehälter 4 getrennt wird.

Auch die zweite elektrisch steuerbare Druckquelle 2 ist als eine hydraulische Zylinder-Kolben-Anordnung (bzw. ein einkreisiger elektrohydraulischer Aktuator (Linearaktuator)) ausgebildet, deren Kolben 82 von einem schematisch angedeuteten Elektromotor 32 unter Zwischenschaltung eines ebenfalls schematisch dargestellten Rotations-Translationsgetriebes 52 betätigt wird. Es ist ein der Erfassung der Rotorlage des Elektromotors 35 dienender Rotorlagensensor 44b vorgesehen.

Der Kolben 82 begrenzt den Druckraum 72 der Druckbereitstellungseinrichtung 2. Druckraum 72 ist über das stromlos offene Trennventil 27 mit der Bremsversorgungsleitung 13 bzw. der zweiten Bremskreisversorgungsleitung 13b trennbar verbunden. Bei betätigter Kreistrennvorrichtung 60 ist Druckquelle 2 über Bremsversorgungsleitung 13 mit den Einlassventilen 6a-6d (und somit den vier Radbremsen 8a-8d) verbunden, bei unbetätigter Kreistrennvorrichtung 60 ist Druckquelle 2 über Bremskreisversorgungsleitung 13b mit den Einlassventilen 6a und 6b (und somit den zwei Radbremsen 8a, 8b) verbunden.

Der Druckraum 72 der Druckquelle 2 ist (im unbetätigten Zustand des Kolbens 82) über ein Schnüffelloch mit einer Verbindungsleitung 42 zum Druckmittelvorratsbehälter 4 hydraulisch verbunden, wobei das Schnüffelloch bei einer Betätigung des Kolbens 82 überfahren / geschlossen wird und so die Verbindung zum Druckmittelvorratsbehälter 4 getrennt wird.

Unabhängig vom Betätigungszustand des Kolbens 82 ist der Druckraum 72 über eine Leitung mit einem Rückschlagventil 22, welches in Richtung des Druckraums öffnet, mit dem Druckmittelvorratsbehälter 4 verbunden, so dass Druckmittel über dies Verbindung in den Druckraum 72 nachgesaugt werden kann.

In dem Druckraum 75, 72 der ersten und der zweiten Druckquelle 5, 2 ist jeweils eine Rückstellfeder angeordnet, welche den Kolben 85, 82 in seinem unbetätigten Zustand zurückstellt.

Bei geschlossener Kreistrennvorrichtung 60 kann die Bremsanlage als in zwei Teilbremskreise I und II aufgeteilt angesehen werden. Dabei ist im ersten Teilbremskreis I die Druckquelle 5 mit nur den Radbremsen 8c und 8d verbunden, und im zweiten Teilbremskreis II die zweite Druckquelle 2 mit nur den Radbremsen 8a und 8b verbunden. Die Bremsanlage umfasst je Teilbremskreis I bzw. II einen Drucksensor 19. Dieser ist bevorzugt vor einer der Radbremsen des Teilbremskreises, beispielsgemäß den Radbremsen 8a bzw. 8d, d.h. zwischen Einlassventil und Radbremse, angeordnet.

Beispielsgemäß umfasst die Bremsanlage eine Messvorrichtung 50 zur Erfassung eines Druckmittelstandes des Druckmittelvorratsbehälters 4 (Pegelmesseinrichtung).

Jedem Rad des Kraftfahrzeugs ist vorteilhafterweise ein Raddrehzahlsensor 10a-10d zugeordnet, welche z.B. für Antiblockierregelfunktionen (ABS) benötigt werden.

Die Bremsanlage ist weiterhin mit einer Fahrdynamik-Sensorik 70 verbunden oder umfasst eine solche. Die Fahrdynamik-Sensorik 70 umfasst zumindest eine Messeinrichtung zur Erfassung einer oder mehrerer der folgenden Größen:
- Längsbeschleunigung, insbesondere Fahrzeuglängsbeschleunigung;
- Querschleunigung, insbesondere Fahrzeugquerbeschleunigung;
- Gierrate;
- Lenkwinkel.

Beispielsgemäß sind die hydraulischen bzw. mechanischen Komponenten, insbesondere die Druckquellen 2, 5, die Simulationseinrichtung 3, die Trennventile 26, 27, die Kreistrennvorrichtung 60, die Einlass- und Auslassventile 6a-6d, 7a-7d sowie Sensoren 19, in einem gemeinsamen Modul, d.h. in einer einzigen hydraulischen Steuer- und Regeleinheit (HCU), angeordnet. Eine Anordnung in zwei oder mehr Modulen ist jedoch auch möglich.

Wie bereits erläutert wurde, ist die erste elektronische Vorrichtung A zur Betätigung der ersten Druckquelle 5 vorgesehen und die unabhängige zweite elektronische Vorrichtung B zur Betätigung der zweiten Druckquelle 2. Allerdings wird das der ersten Druckquelle 5 zugeordnete erste Trennventil 26 von der zweiten elektronischen Vorrichtung B und das der zweiten Druckquelle 2 zugeordnete zweite Trennventil 27 von der ersten elektronischen Vorrichtung A betätigt. Weiterhin ist die Kreistrennvorrichtung 60 sowohl mittels der ersten elektronischen Vorrichtung A als auch mittels der zweiten elektronischen Vorrichtung B betätigbar, d.h. die hydraulische Verbindung zwischen der ersten Bremskreisversorgungsleitung 13a und der zweite Bremskreisversorgungsleitung 13b kann mittels der Vorrichtung A und der Vorrichtung B geöffnet werden. Beispielsgemäß wird das erste Kreistrennventil 61 von der ersten elektronischen Vorrichtung A und das zweite Kreistrennventil 62 von der zweiten elektronischen Vorrichtung B betätigt.

Alternativ kann die Kreistrennvorrichtung 60 durch ein einziges elektrisch betätigbares, stromlos geschlossen ausgeführtes Kreistrennventil gebildet werden, welches mittels der ersten elektronischen Vorrichtung A und der zweiten elektronischen Vorrichtung B betätigt wird. Hierzu kann das Kreistrennventil z.B. zwei Betätigungsspulen umfassen, von den die eine Spule von der Vorrichtung A und die andere Spule von der Vorrichtung B angesteuert wird.

Vorteilhafterweise werden die Einlass- und Auslassventile (kurz Radventile) 6a-6d, 7a-7d alle von derselben elektronischen Vorrichtung betätigt, beispielsgemäß von der Vorrichtung B der zweiten Druckquelle 2.

Bei funktionsfähigen Vorrichtungen A und B wird vorteilhafterweise eine Bremsdruckaufbau mittels der Vorrichtungen A über die erste Druckquelle 5 durchgeführt, wobei radindividuelle Bremsdrücke mittels der Vorrichtungen B über die Radventile 6a-6d und 7a-7d eingestellt werden. Alternativ kann auch ein Bremsdruckaufbau mittels der Vorrichtungen B über die zweite Druckquelle 2 durchgeführt werden. Die Kreistrennvorrichtung 60 kann dabei mittels der Vorrichtung A oder B geöffnet werden. Es ist auch möglich bei geschlossener Kreistrennvorrichtung 60 die Radbremsen 6a, 6b mittels der Vorrichtungen B über die zweite Druckquelle 2 mit Druck zu versorgen und die Radbremsen 6c, 6d mittels der Vorrichtungen A über die erste Druckquelle 5 mit Druck zu versorgen.

Die erste Druckquelle 5 ist hinsichtlich des maximal erzeugbaren Bremsdruckes, der benötigten Druckaufbaudynamik und des maximalen Fördervolumens daher bevorzugt stärker bzw. größer dimensioniert als die zweite Druckquelle 2.

Bei einem Fehler oder Ausfall der Vorrichtungen A oder der ersten Druckquelle 5, wird ein Bremsdruckaufbau mittels der Vorrichtung B über die zweite Druckquelle 2 durchgeführt, wobei die Kreistrennvorrichtung mittels der Vorrichtung B geöffnet werden kann (durch Öffnen des Kreistrennventils 62), um alle Radbremsen 8a-8d mit dem Druck der zweiten Druckquelle 2 zu beaufschlagen. Ein Druckmittelverlust durch das Schnüffelloch der ausgefallenen Druckquelle 5 wird vermieden, indem mittels der Vorrichtung B das Trennventil 26 geschlossen wird. Radindividuelle Bremsdrücke können mittels der Vorrichtung B über die Radventile 6a-6d und 7a-7d eingestellt werden.

Vorteilhafterweise werden daher die Signale der Raddrehzahlsensoren 10a-10d der elektronischen Vorrichtung B zugeführt und von dieser ausgewertet, welche die Radventile 6a-6d, 7a-7d betätigt, um ein radindividuelle Schlupfregelung mittels dieser elektronischen Vorrichtung B zu ermöglichen.

Entsprechend wird bei einem Fehler oder Ausfall der Vorrichtungen B oder der Druckquelle 2, ein Bremsdruckaufbau mittels der Vorrichtung A über die erste Druckquelle 5 durchgeführt, wobei die Kreistrennvorrichtung mittels der Vorrichtung A geöffnet werden kann (durch Öffnen des Kreistrennventils 61), um alle Radbremsen 8a-8d mit dem Druck der Druckquelle 5 zu beaufschlagen. Ein Druckmittelverlust durch das Schnüffelloch der ausgefallenen Druckquelle 2 wird vermieden, indem mittels der Vorrichtung A das Trennventil 27 geschlossen wird.

Vorteilhafterweise werden die Signale der Fahrdynamik-Sensorik 70 der elektronischen Vorrichtung A zugeführt und von dieser ausgewertet. So kann die Vorrichtung A zur Verbesserung der Fahrstabilität oder zur Unterstützung von Lenkmanövern des Autopiloten zumindest achsindividuell unterschiedliche Bremsdrücke mittels der Druckquelle 5 und des Kreistrennventils 61 im Achs-Multiplex-Verfahren einstellen (zeitlich aufeinanderfolgende Druckbeaufschlagung des ersten Teilbremskreises I (Radbremsen 8c, 8d) und des zweiten Teilbremskreises II (Radbremsen 8a, 8b)).

Die Erfindung schlägt eine redundante Bremsanlage für zukünftige Kraftfahrzeuge vor, welche zur Realisierung von hochautomatisierten Fahrfunktionen geeignet ist und speziell in der Lage ist, autonome Bremsanforderungen umzusetzen. Auch nach schwerwiegenden Fehlern, wie beispielsweise einem Energieausfall eines (ersten) Bordnetzes, ist die Bremsanlage in der Lage, gewisse Rest-Bremsfunktionen weiterhin autonom bzw. durch Autopiloten gesteuert zu realisieren.

Die beispielsgemäße Bremsanlage erfüllt insbesondere die folgenden, wichtigen Rest-Bremsfunktionen:
- Verzögerung aufbauen;
- Blockierreihenfolge der Achsen einhalten und ein ungewolltes Destabilisieren bei höheren Verzögerungen vermeiden;
- Lenkbarkeit des Kraftfahrzeugs aufrechterhalten, um den (Auto-)Pilot auch gebremste Ausweichmanöver zu ermöglichen.

Die beispielsgemäße Bremsanlage umfasst zwei elektrisch ansteuerbare Druckquellen mit je einem Trennventil, eine Raddruckmodulationsgruppe (Einlass- und Auslassventile) sowie ein Kreistrennvorrichtung. Die Bremsanlage umfasst keine hydraulische Rückfallebene, sondern eine dauerhafte hydraulische Entkopplung des Fahrers/Bremspedals.

Die beispielsgemäße Bremsanlage umfasst eine primäre und eine sekundäre Druckquelle 5, 2 in Form eines Linearaktuators sowie acht konventionelle Radventile 6a-6d, 7a-7d (Rad-Regelventile) .

Fällt nun eine der beiden Druckquellen 5, 2 fehlerbedingt aus (z.B. durch einen Energie-Bordnetzausfall), so kann die jeweils andere Druckquelle bzw. die ihr zugeordnete elektronische Vorrichtung noch mittels Öffnen eines der beiden Kreistrennventile 60, 61 alle Räder bremsen.

Um Volumenverlust durch das Schnüffelloch in der ausgefallenen Druckquelle zu vermeiden, kann die verbleibende Druckquelle bzw. die ihr zugeordnete elektronische Vorrichtung das jeweils andere Trennventil schließen.

Vorteilhafterweise wird der elektronischen Vorrichtung einer der beiden Druckquellen (beispielsgemäß der Vorrichtung B der zweiten Druckquelle 2) neben dem einen der Kreistrennventile (62) und dem Trennventil (26) der anderen Druckquelle (5) auch die Radventile 6a-6d, 7a-7d zugeordnet. Ebenso werden die Raddrehzahlsensoren 10a-10d dieser elektronischen Vorrichtung (B) zugeordnet. Diese Vorrichtung (B) kann nun quasi unverändert wie bekannt Antiblockierregelungen durchführen und zusammen mit der Möglichkeit Bremsdruck aufzubauen alle Rest-Bremsfunktionen durchführen.

Der anderen elektronischen Vorrichtung (A) werden vorteilhafterweise das andere Paar von Kreistrennventil (61) und Trennventil (27) zugeordnet sowie die ESP-Sensorik 70 (z.B. für Längsbeschleunigung, Querbeschleunigung, Gierrate und Lenkwinkel). Die zugeordnete Druckquelle 5 ist der high-Performance Drucksteller, die im fehlerfreien System Normalbremsungen in höchstem Komfort und Dynamik realisiert. Diese kann nun neben dem Druckaufbau den Druck zentral noch immer mit sehr hoher Dynamik und Genauigkeit regeln. Das Kreistrennventil 61 ermöglicht sogar, dass achsweise unterschiedliche Drücke eingestellt werden können. Dies erfolgt nach einem Achs-Multiplex-Verfahren. Die Leistungsfähigkeit dieser Regelstrategie ist in Bezug auf Bremsleistung zwar nicht auf dem Niveau des fehlerfreien Systems; es ist jedoch für den beschriebenen Fehlerfall ausreichend zur Sicherstellung der Rest-Bremsfunktionen.

## Patentansprüche

1. Bremsanlage für ein Kraftfahrzeug mit zumindest vier hydraulisch betätigbaren Radbremsen (8a-8d), umfassend
• eine erste elektrisch steuerbare Druckquelle (5), die über ein erstes Trennventil (26) mit einer ersten Bremskreisversorgungsleitung (13a) trennbar verbunden ist,
• eine zweite elektrisch steuerbare Druckquelle (2), die über ein zweites Trennventil (27) mit einer zweiten Bremskreisversorgungsleitung (13b) trennbar verbunden ist,
• zumindest vier elektrisch betätigbare Einlassventile (6a-6d) zum Einstellen radindividueller Bremsdrücke, wobei jedes Einlassventil einer der Radbremse zugeordnet ist, wobei die erste Bremskreisversorgungsleitung (13a) mit zwei der Einlassventile (6c, 6d) verbunden ist und die zweite Bremskreisversorgungsleitung (13b) mit den zwei anderen Einlassventilen (6a, 6b) verbunden ist,
• ein elektrisch betätigbares Auslassventil (7a-7d) je Radbremse (8a-8d) zum Ablassen von Druckmittel aus der Radbremse in einen, insbesondere unter Atmosphärendruck stehenden, Druckmittelvorratsbehälter (4),
• eine elektrisch betätigbare Kreistrennvorrichtung (60), durch welche die erste Bremskreisversorgungsleitung (13a) und die zweite Bremskreisversorgungsleitung (13b) hydraulisch getrennt sind, wenn die Kreistrennvorrichtung in einem unbetätigten Zustand ist, und durch welche die erste Bremskreisversorgungsleitung (13a) und die zweite Bremskreisversorgungsleitung (13b) hydraulisch miteinander verbunden sind, wenn die Kreistrennvorrichtung in einem betätigten Zustand ist,
• eine erste elektronische Vorrichtung (A), mittels welcher die erste Druckquelle betätigt wird, und
• eine zweite elektronische Vorrichtung (B), mittels welcher die zweite Druckquelle betätigt wird, wobei die zweite elektronische Vorrichtung (B) von der ersten elektronischen Vorrichtung (A) elektrisch unabhängig ist,
**dadurch gekennzeichnet, dass** das erste Trennventil (26) von der zweiten elektronischen Vorrichtung (B) und das zweite Trennventil (27) von der ersten elektronischen Vorrichtung (A) betätigt wird.

2. Bremsanlage nach Anspruch 1, **dadurch gekennzeichnet, dass** das erste und das zweite Trennventil (26, 27) stromlos offen ausgeführt sind.

3. Bremsanlage nach Anspruch 1 oder 2, **dadurch gekennzeichnet, dass** die Kreistrennvorrichtung (60) sowohl mittels der ersten elektronischen Vorrichtung (A) als auch mittels der zweiten elektronischen Vorrichtung (B) betätigbar ist.

4. Bremsanlage nach einem der vorhergehenden Ansprüche, **dadurch gekennzeichnet, dass** die Kreistrennvorrichtung (60) ein erstes elektrisch betätigbares, stromlos geschlossen ausgeführtes Kreistrennventil (61) und ein zweites elektrisch betätigbares, stromlos geschlossen ausgeführtes Kreistrennventil (62) umfasst, wobei die beiden Kreistrennventile (61, 62) einander parallel geschaltet sind.

5. Bremsanlage nach Anspruch 4, **dadurch gekennzeichnet, dass** das erste Kreistrennventil (61) von der ersten elektronischen Vorrichtung (A) und das zweite Kreistrennventil (62) von der zweiten elektronischen Vorrichtung (B) betätigt wird.

6. Bremsanlage nach einem der vorhergehenden Ansprüche, **dadurch gekennzeichnet, dass** eine Simulationseinrichtung (3) zur Erzeugung eines Bremspedalgefühls vorgesehen ist, welche mit einem Bremspedal (1) gekoppelt ist, und dass keine mechanische und/oder hydraulische Wirkverbindung zwischen dem Bremspedal (1) und den Radbremsen (8a-8d) vorgesehen ist.

7. Bremsanlage nach einem der vorhergehenden Ansprüche, **dadurch gekennzeichnet, dass** die erste Druckquelle (5) durch eine erste Zylinder-Kolben-Anordnung mit einem ersten hydraulischen Druckraum (75) gebildet wird, deren erster Kolben (85) durch einen ersten elektromechanischen Aktuator (35, 55) betätigt wird, wobei der erste Druckraum in einem unbetätigten Zustand des ersten Kolbens über zumindest ein erstes Schnüffelloch mit einer ersten Verbindungsleitung (45) verbunden ist, welche mit dem Druckmittelvorratsbehälter (4) verbunden ist.

8. Bremsanlage nach einem der vorhergehenden Ansprüche, **dadurch gekennzeichnet, dass** die zweite Druckquelle (2) durch eine zweite Zylinder-Kolben-Anordnung mit einem zweiten hydraulischen Druckraum (72) gebildet wird, deren zweiter Kolben (82) durch einen elektromechanischen zweiten Aktuator (32, 52) betätigt wird, wobei der zweite Druckraum in einem unbetätigten Zustand des zweiten Kolbens über zumindest ein zweites Schnüffelloch mit einer zweiten Verbindungsleitung (42) verbunden ist, welche mit dem Druckmittelvorratsbehälter (4) verbunden ist.

9. Bremsanlage nach einem der vorhergehenden Ansprüche, **dadurch gekennzeichnet, dass** alle Einlass- und Auslassventile (6a-6d, 7a-7d) von derselben elektronischen Vorrichtung (B) betätigt werden.

10. Bremsanlage nach Anspruch 9, **dadurch gekennzeichnet, dass** ein Raddrehzahlsensor (10a-10d) für jedes einer Radbremse zugeordnete Rad vorgesehen ist, wobei die Signale der Raddrehzahlsensoren derselben elektronischen Vorrichtung (B) zugeführt und von dieser ausgewertet werden, welche die Einlass- und Auslassventile betätigt.

11. Bremsanlage nach Anspruch 9 oder 10, **dadurch gekennzeichnet, dass** eine Fahrdynamik-Sensorik (70) vorgesehen ist, deren Signale der anderen elektronischen Vorrichtung (A) als der elektronischen Vorrichtung (B), welche die Einlass- und Auslassventile betätigt, zugeführt und von dieser ausgewertet werden.

12. Verfahren zum Betrieb einer Bremsanlage nach einem der Ansprüche 1 bis 11, **dadurch gekennzeichnet, dass** bei einem Ausfall der ersten Druckquelle (5) mittels der zweiten elektronischen Vorrichtung (B) das erste Trennventil (26) geschlossen und die zweite Druckquelle (2) zum Aufbau eines Bremsdruckes betätigt wird.

13. Verfahren nach Anspruch 12, **dadurch gekennzeichnet, dass** bei einem Ausfall der ersten Druckquelle (5) die Kreistrennvorrichtung (60) mittels der zweiten elektronischen Vorrichtung (B) betätigt wird, so dass die erste Bremskreisversorgungsleitung (13a) und die zweite Bremskreisversorgungsleitung (13b) hydraulisch miteinander verbunden sind.

14. Verfahren nach Anspruch 13, **dadurch gekennzeichnet, dass** mittels der zweiten elektronischen Vorrichtung (B) die Einlass- und Auslassventile (6a-6d, 7a-7d) zum Einstellen radindividueller Bremsdrücke betätigt werden.

15. Verfahren nach einem der Ansprüche 12 bis 14, **dadurch gekennzeichnet, dass** bei einem Ausfall der zweiten Druckquelle (2) mittels der ersten elektronischen Vorrichtung (A) die erste Druckquelle (5) und die Kreistrennvorrichtung (60) derart betätigt werden, dass achsindividuelle Bremsdrücke an den Radbremsen eingestellt werden.

## Claims

1. Brake system for a motor vehicle with at least four hydraulically actuable wheel brakes (8a-8d), comprising
• a first electrically controllable pressure source (5) which is connected to a first brake circuit supply line (13a) such that it can be disconnected via a first cut-off valve (26),
• a second electrically controllable pressure source (2) which is connected to a second brake circuit supply line (13b) such that it can be disconnected via a second cut-off valve (27),
• at least four electrically actual ball inlet valves (6a-6d) for setting wheel-individual brake pressures, each inlet valve being assigned to one of the wheel brakes, the first brake circuit supply line (13a) being connected to two of the inlet valves (6c, 6d), and the second brake circuit supply line (13b) being connected to the two other inlet valves (6a, 6b),
• an electrically actuable outlet valve (7a-7d) per wheel brake (8a-8d) for discharging pressure medium from the wheel brake into a pressure medium storage reservoir (4) which, in particular, is under atmospheric pressure,
• an electrically actuable circuit cut-off apparatus (60), by way of which the first brake circuit supply line (13a) and the second brake circuit supply line (13b) are hydraulically disconnected when the circuit cut-off apparatus is in an unactuated state, and by way of which the first brake circuit supply line (13a) and the second brake circuit supply line (13b) are connected hydraulically to one another when the circuit cut-off apparatus is in an actuated state,
• a first electronic apparatus (A), by means of which the first pressure source is actuated, and
• a second electronic apparatus (B), by means of which the second pressure source is actuated, the second electronic apparatus (B) being electrically independent of the first electronic apparatus (A),
**characterized in that** the first cut-off valve (26) is actuated by the second electronic apparatus (B), and the second cut-off valve (27) is actuated by the first electronic apparatus (A).

2. Brake system according to Claim 1, **characterized in that** the first and the second cut-off valve (26, 27) are of normally open configuration.

3. Brake system according to Claim 1 or 2, **characterized in that** the circuit cut-off apparatus (60) can be actuated both by means of the first electronic apparatus (A) and by means of the second electronic apparatus (B).

4. Brake system according to one of the preceding claims, **characterized in that** the circuit cut-off apparatus (60) comprises a first and electronically actuable circuit cut-off valve (61) of normally closed configuration and a second electrically actuable circuit cut-off valve (62) of normally closed configuration, the two circuit cut-off valves (61, 62) being connected in parallel with one another.

5. Brake system according to Claim 4, **characterized in that** the first circuit cut-off valve (61) is actuated by the first electronic apparatus (A), and the second circuit cut-off valve (62) is actuated by the second electronic apparatus (B).

6. Brake system according to one of the preceding claims, **characterized in that** a simulation device (3) is provided for generating a brake pedal sensation, which simulation device (3) is coupled to a brake pedal (1), and **in that** no mechanical and/or hydraulic operative connection is provided between the brake pedal (1) and the wheel brakes (8a-8d).

7. Brake system according to one of the preceding claims, **characterized in that** the first pressure source (5) is formed by way of a first cylinder/piston arrangement with a first hydraulic pressure space (75), the first piston (85) of which is actuated by way of a first electromechanical actuator (35, 55), the first pressure space being connected in an unactuated state of the first piston via at least one first snifter hole to a first connecting line (45) which is connected to the pressure medium storage reservoir (4).

8. Brake system according to one of the preceding claims, **characterized in that** the second pressure source (2) is formed by way of a second cylinder/piston arrangement with a second hydraulic pressure space (72), the second piston (82) of which is actuated by way of an electromechanical second actuator (32, 52), the second pressure space being connected in an unactuated state of the second piston via at least one second snifter hole to a second connecting line (42) which is connected to the pressure medium storage reservoir (4).

9. Brake system according to one of the preceding claims, **characterized in that** all the inlet and outlet valves (6a-6d, 7a-7d) are actuated by the same electronic apparatus (B).

10. Brake system according to Claim 9, **characterized in that** one wheel rotational speed sensor (10a-10d) is provided for each wheel which is assigned to a wheel brake, the signals of the wheel rotational speed sensors being fed to the same electronic apparatus (B) and being evaluated by the latter which actuates the inlet and outlet valves.

11. Brake system according to Claim 9 or 10, **characterized in that** a driving dynamics sensor system (70) is provided, the signals of which are fed to the other electronic apparatus (A) than the electronic apparatus (B) which actuates the inlet and outlet valves, and are evaluated by this other electronic apparatus (A).

12. Method for operating a brake system according to one of Claims 1 to 11, **characterized in that**, in the case of a failure of the first pressure source (5), the first cut-off valve (26) is closed and the second pressure source (2) is actuated in order to build up a brake pressure by means of the second electronic apparatus (B).

13. Method according to Claim 12, **characterized in that**, in the case of a failure of the first pressure source (5), the circuit cut-off apparatus (60) is actuated by means of the second electronic apparatus (B), with the result that the first brake circuit supply line (13a) and the second brake circuit supply line (13b) are connected hydraulically to one another.

14. Method according to Claim 13, **characterized in that** the inlet and outlet valves (6a-6d, 7a-7d) are actuated by means of the second electronic apparatus (B) in order to set wheel-individual brake pressures.

15. Method according to one of Claims 12 to 14, **characterized in that**, in the case of a failure of the second pressure source (2), the first pressure source (5) and the circuit cut-off apparatus (60) are actuated by means of the first electronic apparatus (A) in such a way that axle-individual brake pressures are set at the wheel brakes.

## Revendications

1. Système de freinage d'un véhicule automobile pourvu d'au moins quatre freins de roue (8a-8d) actionnables hydrauliquement, ledit système comprenant
• une première source de pression (5) commandable électriquement qui est reliée de manière séparable à une première conduite d'alimentation de circuit de freinage (13a) par le biais d'une première vanne de séparation (26),
• une deuxième source de pression (2) commandable électriquement qui est reliée de manière séparable à une deuxième conduite d'alimentation du circuit de freinage (13b) par le biais d'une deuxième vanne de séparation (27),
• au moins quatre vannes d'entrée (6a-6d) actionnables électriquement qui sont destinées à régler des pressions de freinage spécifiques à chaque roue, chaque vanne d'entrée étant associée à l'un des freins de roue, la première conduite d'alimentation de circuit de freinage (13a) étant reliée à deux des vannes d'entrée (6c, 6d) et la deuxième conduite d'alimentation de circuit de freinage (13b) étant reliée aux deux autres vannes d'entrée (6a, 6b),
• une vanne de sortie (7a-7d) actionnable électriquement pour chaque frein de roue (8a-8d) qui est destinée à évacuer l'agent sous pression du frein de roue jusque dans un réservoir d'agent sous pression (4), en particulier à la pression atmosphérique,
• un dispositif de séparation de circuit (60) actionnable électriquement qui permet de séparer hydrauliquement la première conduite d'alimentation de circuit de freinage (13a) et la deuxième conduite d'alimentation de circuit de freinage (13b) lorsque le dispositif de séparation de circuit est dans un état non actionné et qui permet de relier hydrauliquement la première conduite d'alimentation de circuit de freinage (13a) et la deuxième conduite d'alimentation de circuit de freinage (13b) l'une à l'autre lorsque le dispositif de séparation de circuit est dans un état actionné,
• un premier dispositif électronique (A) qui permet d'actionner la première source de pression, et
• un deuxième dispositif électronique (B) qui permet d'actionner la deuxième source de pression, le deuxième dispositif électronique (B) étant électriquement indépendant du premier dispositif électronique (A),
**caractérisé en ce que** la première vanne de séparation (26) est actionnée par le deuxième dispositif électronique (B) et la deuxième vanne de séparation (27) est actionnée par le premier dispositif électronique (A).

2. Système de freinage selon la revendication 1, **caractérisé en ce que** la première et la deuxième vanne de séparation (26, 27) sont normalement ouvertes.

3. Système de freinage selon la revendication 1 ou 2, **caractérisé en ce que** le dispositif de séparation de circuit (60) peut être actionné aussi bien au moyen du premier dispositif électronique (A) qu'au moyen du deuxième dispositif électronique (B).

4. Système de freinage selon l'une des revendications précédentes, **caractérisé en ce que** le dispositif de séparation de circuit (60) comprend une première vanne de séparation de circuit (61) actionnable électriquement qui est fermée à l'état non alimenté et une deuxième vanne de séparation de circuit (62) actionnable électriquement qui est fermée à l'état non alimenté, les deux vannes de séparation de circuit (61, 62) étant montées en parallèle l'une à l'autre.

5. Système de freinage selon la revendication 4, **caractérisé en ce que** la première vanne de séparation de circuit (61) est actionnée par le premier dispositif électronique (A) et la deuxième vanne de séparation de circuit (62) est actionnée par le deuxième dispositif électronique (B).

6. Système de freinage selon l'une des revendications précédentes, **caractérisé en ce qu'**une installation de simulation (3) destinée à générer une sensation de pédale de frein est prévue qui est accouplée à une pédale de frein (1), et **en ce qu'**aucune liaison fonctionnelle mécanique et/ou hydraulique est prévue entre la pédale de frein (1) et les freins de roue (8a-8d).

7. Système de freinage selon l'une des revendications précédentes, **caractérisé en ce que** la première source de pression (5) est formée par un premier ensemble cylindre-piston qui est pourvu d'une première chambre de pression hydraulique (75) et dont le premier piston (85) est actionné par un premier actionneur électromécanique (35, 55), la première chambre de pression étant reliée à une première conduite de liaison (45), qui est reliée au réservoir d'agent sous pression (4), par le biais d'au moins un premier trou de purge lorsque le premier piston n'est pas actionné.

8. Système de freinage selon l'une des revendications précédentes, **caractérisé en ce que** la deuxième source de pression (2) est formée par un deuxième ensemble cylindre-piston qui est pourvu d'une deuxième chambre de pression hydraulique (72) et dont le deuxième piston (82) est actionné par un deuxième actionneur électromécanique (32, 52), la deuxième chambre de pression étant reliée à une deuxième conduite de liaison (42), qui est reliée au réservoir d'agent sous pression (4), par le biais d'au moins un deuxième trou de purge lorsque le deuxième piston n'est pas actionné.

9. Système de freinage selon l'une des revendications précédentes, **caractérisé en ce que** toutes les vannes d'entrée et de sortie (6a-6d, 7a-7d) sont actionnées par le même dispositif électronique (B).

10. Système de freinage selon la revendication 9, **caractérisé en ce qu'**un capteur de vitesse de rotation de roue (10a-10d) est prévu pour chaque roue associée à un frein de roue, les signaux des capteurs de vitesse de rotation de roue étant amenés au même dispositif électronique (B) et évalués par celui-ci qui actionne les vannes d'entrée et de sortie.

11. Système de freinage selon la revendication 9 ou 10, **caractérisé en ce qu'**un système de détection de dynamique de roulement (70) est prévu dont les signaux sont amenés au dispositif électronique (A), autre que le dispositif électronique (B) qui actionne les vannes d'entrée et de sortie, et qui sont évalués par celui-ci.

12. Procédé de fonctionnement d'un système de freinage selon l'une des revendications 1 à 11, **caractérisé en ce que**, en cas de défaillance de la première source de pression (5), la première vanne de séparation (26) est fermée au moyen du deuxième dispositif électronique (B) et la deuxième source de pression (2) est actionnée pour établir une pression de freinage.

13. Procédé selon la revendication 12, **caractérisé en ce que**, en cas de défaillance de la première source de pression (5), le dispositif de séparation de circuit (60) est actionné au moyen du deuxième dispositif électronique (B) de sorte que la première conduite d'alimentation de circuit de freinage (13a) et la deuxième conduite d'alimentation de circuit de freinage (13b) sont reliées hydrauliquement l'une à l'autre.

14. Procédé selon la revendication 13, **caractérisé en ce que** les vannes d'entrée et de sortie (6a-6d, 7a-7d) sont actionnées au moyen du deuxième dispositif électronique (B) afin de régler des pressions de freinage spécifiques à chaque roue.

15. Procédé selon l'une des revendications 12 à 14, **caractérisé en ce que**, en cas de défaillance de la deuxième source de pression (2), le premier dispositif électronique (A) actionne la première source de pression (5) et le dispositif de séparation de circuit (60) de manière à pouvoir régler les pressions de freinage spécifiques à chaque essieu sur les freins de roue.
